# EUROPÄISCHE PATENTSCHRIFT

(11) **EP 1 017 555 B1**
(45) Veröffentlichungstag und Bekanntmachung des Hinweises auf die Patenterteilung: **31.10.2001**
(21) Anmeldenummer: 98951446.8
(22) Anmeldetag: 21.09.1998
(51) Int. Cl.: B29C 33/68, B29C 33/42, B29C 59/02, B05D 3/06, B44C 5/04

(54) **BAHNFÖRMIGE MATRIZE ZUM ERZEUGEN VON OBERFLÄCHENMATERIALEN SOWIE VERFAHREN ZUM HERSTELLEN EINER SOLCHEN MATRIZE**
STRIP-SHAPED MOULD CAVITY FOR PRODUCING SURFACING MATERIALS AND METHOD FOR PRODUCING A MOULD CAVITY OF THIS TYPE
MATRICE SOUS FORME DE BANDE POUR PRODUIRE DES MATERIAUX DE SURFACE ET PROCEDE PERMETTANT DE PRODUIRE UNE TELLE MATRICE

(30) Priorität: 22.09.1997 DE 19741680
(43) Veröffentlichungstag der Anmeldung: 12.07.2000
(73) Patentinhaber: WKP Württembergische Kunststoffplatten-Werke GmbH & Co. KG, 72669 Unterensingen (DE)
(72) Erfinder: HALLER, Heinz, D-73207 Plochingen (DE); SCHWILK, Joachim, D-73257 Köngen (DE)
(74) Vertreter: Hiebsch, Gerhard F., Dipl.-Ing.
(86) Internationale Anmeldenummer: EP9806018
(87) Internationale Veröffentlichungsnummer: WO9915325

(56) Entgegenhaltungen:
- EP-A- 0 079 759
- US-A- 3 667 994
- US-A- 4 322 450
- US-A- 5 468 542

## Beschreibung

Die Erfindung betrifft eine bahnförmige Matrize zum Erzeugen von Oberflächenmaterialien -- insbesondere von Oberflächen aus Melaminharz bei der Fertigung von Schichtstoffplatten bzw. kunstharzbeschichteten Spanplatten -- mit strukturierter Oberfläche. Zudem erfaßt die Erfindung ein Verfahren zum Herstellen einer solchen Matrize.

Bei der Fertigung von beispielsweise Schichtstoffplatten in kontinuierlich arbeitenden Pressen werden üblicherweise strukturierte Preßbleche oder Preßbänder eingesetzt, mit denen diese Oberflächenmaterialien mit einer Struktur versehen werden können. Weiterhin werden glatte und strukturierte Trennpapiere eingesetzt, deren Struktur in das Papier eingeprägt oder deren Trennbeschichtung durch eine strukturierte Walze aufgebracht wird.

Die Verwendung einer bahnförmigen Matrize zum Erzeugen von Oberflächenmaterialien ist der US-A-3 667 994 zu entnehmen. Nach dem Beschichten eines Basispapiers mit einer mineralischen Pigmentschicht glatter Oberfläche wird ein Abziehpapier dadurch hergestellt, dass eine alkoholische Polyamidlösung aufgebracht wird, die nach dem Trocknen und Aushärten eine die texturierte Oberfläche jenes Abziehpapiers darstellt. Letzteres wird dann mit Polyvinylchloridplastisol beschichtet.

In Kenntnis dieser Gegebenheiten hat sich der Erfinder das Ziel gesetzt, den Formvorgang zu vereinfachen und insbesondere eine Matrize der eingangs erwähnten Art anzubieten, welche einfach sowie kostengünstig hergestellt und gehandhabt zu werden vermag.

Zur Lösung dieser Aufgabe führen die Lehren der unabhängigen Ansprüche; die Unteransprüche geben günstige Weiterbildungen an.

Erfindungsgemäß ist die Matrize eine flexible Bahn aus Papier oder Folie mit einer gegen das jeweilige Oberflächenmaterial trennenden Schicht, die unvollständig strahlenvernetzt ist. Auf dieser Trennschicht ist eine dreidimensionale Formstruktur aus UV-härtenden Druckfarben aufgebracht. Dank jener unvollständigen Vernetzung ist es möglich, die aufgebrachten Druckfarben unmittelbar mit der flexiblen Bahn in Verbindung zu bringen und den gesamten Verbund anschließend auszuhärten.

Im Gegensatz zum Stande der Technik kann hier auf eine glatte, unvollständig ausgehärtete Beschichtung in einfacher Weise mit im Vergleich kostengünstigen, bestimmungsgemäß gravierten Walzen die Struktur aufgesetzt werden.

Bei einer bevorzugten Ausführungsform ist die trennende Schicht aus einem gegen Melaminharz trennenden Lack hergestellt; diese Matrize kann dann problemlos zur Strukturierung hergestellter Schichtstoffplatten aus Melaminharzen eingesetzt werden.

Im Rahmen der Erfindung liegt ein Verfahren, bei dem die flexible Bahn aus Papierfolie mit einem trennenden Lack beschichtet und dieser unvollständig strahlenvernetzt wird, wonach die so entstandene Verbundbahn mit UV-härtenden Druckfarben in strukturierter Oberfläche bedruckt und der Verbund mit Elektronen hoher Dosis ausgehärtet wird.

Nach einem weiteren Merkmal der Erfindung werden die Druckfarben vorzugsweise mit UV-Licht ausgehärtet.

Als günstig hat es sich außerdem erwiesen, auf ein einstufig gestrichenes Papier -- beispielsweise mit 70 g/m² -- 6 g trennenden ESH-Lack -- elektronenstrahlhärtbar -- aufzutragen und anschließend eine etwa 10 Mikrometer hohe Struktur aus den Druckfarben zu erzeugen.

Um ein einfaches Einfärben des Oberflächenmaterials zu erreichen, kann die erhabene Struktur mit Farbstoffen angereichert werden, die während des in der Presse durchgeführten Preßvorganges in das Oberflächenmaterial sublimiert werden.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt in ihrer einzigen Figur einen Schnitt durch eine bahnförmige Matrize zum Herstellen von Oberflächenmaterialien.

Ein bahnförmiges Substrat 10 -- bevorzugt in Form von Papier (Polyester-), PET-Folie (Polypropylen-), PP-Folie oder LDPE-Folie, einer Polyethylenfolie mit geringer Dichte, -- soll als Matrize bei der Herstellung von Melaminharzoberflächen oder -- unter bestimmten Bedingungen -- auch für Polyester- und Lackoberflächen wie ein strukturiertes Preßblech oder Preßband verwendet werden können, wozu es in einem Druckverfahren eine neue Form erhält.

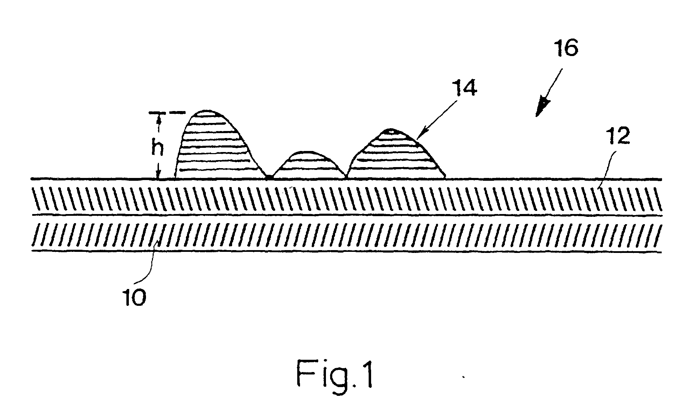

Ein einseitig gestrichenes, dünnes Papier von etwa 70 g/m² ist mit einem gegen Melaminharz trennenden Lack beschichtet; diese Schicht 12 aus Trennlack ist mit einer Elektronendosis so beaufschlagt worden, daß die Beschichtung unvollständig vernetzt ist und in einem erneuten Durchgang ein Bedrucken mit UV-härtenden Druckfarben möglich wird. Es entsteht auf dem Substrat 10 oberhalb der in Fig. 1 überhöht dargestellten Trennschicht 12 eine einem Gebirge ähnliche Formstruktur 14 der Höhe h; die Druckform des nicht weiter dargestellten Druckzylinders für den Druckvorgang ist so gestaltet, daß auf der Trennschicht 12 jene Formstruktur 14 deutlich erhaben entsteht.

Die Druckfarbe wird vorzugsweise mit UV-Licht ausgehärtet, anschließend wird der gesamte Verbund aus Substrat 10, Trennschicht 12 und davon aufragender Formstruktur 14 mit Elektronen hoher Dosis ausgehärtet.

Die beschriebene, bahnförmige Matrize 16 wird beispielsweise zum Herstellen einer Schichtstoffplatte in einer kontinuierlich arbeitenden Presse dieser zugeführt und bei einem Druck von etwa 20 bis 40 kp/cm² und einer Temperatur von etwa 160°C bis 180°C auf die jenen Schichtstoff bildenden Melaminfilme bzw. Phenolfilme gepreßt. Nach dem Aushärten wird die Matrize 16 von der Schichtstoffplatte abgezogen und wieder aufgewickelt; die Matrize kann mehrfach verwendet werden.

Die auf die Trennschicht 12 aus Trennlack aufgesetzte Struktur 14 kann mit Farbstoffen angereichert sein, die während des Preßvorganges unter Druck und Temperatur in die Melaminschicht sublimieren und dort den Porengrund einfärben; dank dieses Verfahrens ist es möglich, während der kontinuierlichen Beschichtung einer Spanplatte mit Melaminfilmen die Oberfläche zu prägen und gleichzeitig die Struktur farbig darzustellen.

### Beispiel:

Es wird ein einstufig gestrichenes Papier 10 mit 6 g trennendem ESH-Lack -- Trennschicht 12 -- beschichtet und eine 10 Mikrometer hohe Struktur 14 erzeugt, beispielsweise "Esche Blume", also mit dem Porenbild eines Esche-Furniers. Die Strahlendosis im ersten Durchgang beträgt dabei 0,3 Mrad, die Strahlendosis im zweiten Durchgang hier 3 Mrad.

## Patentansprüche

1. Bahnförmige Matrize zum Erzeugen von Oberflächenmaterialien, insbesondere von Oberflächen aus Melaminharz bei der Fertigung von Schichtstoffplatten, mit strukturierter Oberfläche,
**dadurch gekennzeichnet,**
**daß** eine flexible Bahn (10) aus Papier oder Folie mit einer gegen das Oberflächenmaterial trennenden Schicht (12) unter Bildung niedrig vernetzter Bereiche versehen, auf diesen eine dreidimensionale Formstruktur aus UV-härtenden Druckfarben aufgebracht sowie der Verbund aus Bahn, Schicht und dreidimensionaler Formstruktur ausgehärtet ist.

2. Matrize nach Anspruch 1, **gekennzeichnet durch** eine trennende Schicht (12) aus gegen Melaminharz trennendem Lack.

3. Verfahren zum Herstellen einer Matrize nach Anspruch 1 oder 2, bei dem die flexible Bahn aus Papier oder Folie mit einem trennenden Lack beschichtet und dieser unvollständig vernetzt wird, wonach die Verbundbahn mit UV-härtenden Druckfarben in strukturierter Oberfläche bedruckt und der Verbund mit Elektronen hoher Dosis ausgehärtet wird.

4. Verfahren nach Anspruch 3, **dadurch gekennzeichnet, daß** die Druckfarben mit UV-Licht ausgehärtet werden.

5. Verfahren nach Anspruch 3 oder 4, **dadurch gekennzeichnet, daß** die Druckfarben mit einem Druckzylinder aufgebracht werden und eine deutlich erhabene Struktur auf der trennenden Schicht geformt wird.

6. Verfahren nach einem der Ansprüche 3 bis 5, **dadurch gekennzeichnet, daß** auf eine einstufig gestrichene Papierbahn ein trennender ESH-Lack aufgetragen und anschließend eine Struktur einer Höhe von etwa 10 my aufgedruckt wird.

7. Verfahren nach einem der Ansprüche 3 bis 6, **dadurch gekennzeichnet, daß** die Strahlendosis im ersten Durchgang etwa einem Zehntel der Strahlendosis im zweiten Durchgang entspricht.

8. Verfahren nach Anspruch 7, **gekennzeichnet durch** eine Strahlendosis im ersten Durchgang von etwa 0,3 Mrad und eine Strahlendosis im folgenden Durchgang von etwa 3 Mrad.

9. Verfahren nach einem der Ansprüche 3 bis 8, **dadurch gekennzeichnet, daß** die erhabene Struktur mit Farbstoff/en angereichert wird und der/die Farbstoff/e während des Preßvorgangs in das Oberflächenmaterial sublimiert wird/werden.

## Claims

1. Strip-shaped mould for producing surface materials, in particular surfaces made from melamine resin when manufacturing laminated panels, having structured surface, **characterised in that** a flexible web (10) of paper or film having a separating layer (12) against the surface material is provided forming low cross-linked regions, a three-dimensional shaped structure made from UV-curing printing inks is applied to the latter, and the composite comprising web, layer and three dimensional shaped structure is cured.

2. Mould according to claim 1, **characterised by** a separating layer (12) made from lacquer separating against melamine resin.

3. Process for producing a mould according to claim 1 or 2, in which the flexible web of paper or film is coated with a separating lacquer and the latter is incompletely cross-linked, after which the composite web is printed with UV-curing printing inks in structured surface and the composite is cured using electrons of high dose.

4. Process according to claim 3, **characterised in that** the printing inks are cured using UV light.

5. Process according to claim 3 or 4, **characterised in that** the printing inks are applied using an impression cylinder and a clearly raised structure is formed on the separating layer.

6. Process according to one of claims 3 to 5, **characterised in that** a separating EBC lacquer is applied to a single-stage coated paper web and then a structure of a height of about 10 my is imprinted.

7. Process according to one of claims 3 to 6, **characterised in that** the radiation dose in the first passage corresponds approximately to one tenth of the radiation dose in the second passage.

8. Process according to claim 7, **characterised by** a radiation dose in the first passage of approximately 0.3 Mrad and a radiation dose in the subsequent passage of approximately 3 Mrad.

9. Process according to one of claims 3 to 8, **characterised in that** the raised structure is enriched with dyestuffs and the dyestuff/s is/are sublimed into the surface material during the pressing process.

## Revendications

1. Matrice en forme de bande, pour la fabrication de matériaux de surfaces, en particulier de surfaces en résine de mélamine lors de la finition de panneaux stratifiés avec une surface structurée,
**caractérisée en ce que** :
- une bande flexible (10) de papier ou une feuille avec une couche (12) de séparation contre le matériau de surface servent de zones de faible réticulation, sur lesquelles une structure de forme tridimensionnelle réalisée en encre d'impression durcissant aux ultraviolets est appliquée, la liaison entre la bande, la couche et la structure de forme tridimensionnelles étant durcie.

2. La matrice selon la revendication 1, **caractérisée par** une couche de séparation (12) en peinture contre la résine de mélamine.

3. Procédé de fabrication d'une matrice selon l'une des revendications 1 ou 2, dans lequel la bande flexible en papier ou en film est recouverte de peinture de séparation, cette peinture étant réticulée de façon incomplète, la bande de liaison étant imprimée d'une encre d'impression durcissant aux ultraviolets en surface structurée, et la liaison étant durcie par une irradiation d'électrons en quantité élevée.

4. Le procédé selon la revendication 3, **caractérisé en ce que** l'encre d'impression est durcie par une lumière ultraviolette.

5. Le procédé de la revendication 3 ou 4, **caractérisé en ce que** les encres d'impression sont appliquées avec un rouleau d'imprimerie, et une structure nettement en relief étant formée sur la couche de séparation.

6. Le procédé de l'une des revendications 3 à 5, **caractérisé en ce qu'**une peinture ESH de séparation est appliquée sur une bande de papier couché à un seul étage, et finalement une structure d'une hauteur d'environ 10 µm est imprimée.

7. Le procédé de l'une des revendications 3 à 6, **caractérisé en ce que** la dose d'irradiation dans un premier passage vaut un dixième de la dose d'irradiation lors d'un deuxième passage.

8. Le procédé de la revendication 7, **caractérisé par** une dose d'irradiation lors du premier passage de l'ordre de 0,3 Mrad et une dose d'irradiation lors du passage suivant de l'ordre de 3 Mrad.

9. Le procédé de l'une des revendications 3 à 8, **caractérisé en ce que** la structure en relief est concentrée en colorant/s ou encre/s et **en ce que** le ou les colorant/s ou encre/s sont sublimés durant une étape d'impression du matériau de surface.
